# EUROPÄISCHE PATENTANMELDUNG

(11) **EP 4 270 281 A1**
(43) Veröffentlichungstag der Anmeldung: **01.11.2023**
(21) Anmeldenummer: 23155762.0
(22) Anmeldetag: 09.02.2023
(51) Int. Cl.: G06Q 10/0631, G06Q 50/02, A01B 69/04

(54) **SCHWARMASSISTENZSYSTEM ZUM PLANEN UND STEUERN DES EINSATZES MINDESTENS EINER AUTONOMEN LANDWIRTSCHAFTLICHEN UNIVERSAL-ARBEITSMASCHINE**

(30) Priorität: 27.04.2022 DE 102022110279
(71) Anmelder: CLAAS E-Systems GmbH, 49201 Dissen (DE)
(72) Erfinder: Mähler, Reinhold, 33378 Rheda-Wiedenbrück (DE); Ehlert, Christian, 33719 Bielefeld (DE); Bormann, Bastian, 33334 Gütersloh (DE); Baumgarten, Joachim, 48361 Beelen (DE); Neitemeier, Dennis, 59510 Lippetal (DE); Witte, Johann, 58730 Fröndenberg (DE); Redenius, Jannik, 32361 Pr. Oldendorf (DE); Bohl, Arne, 33330 Gütersloh (DE); Nacke, Dr., Eberhard, 33332 Gütersloh (DE); Apke, Christoph, 33659 Bielefeld (DE); Korthals, Timo, 33818 Leopoldshöhe (DE); Thiesmann, Waldemar, 49080 Osnabrück (DE); Schröder, Axel, 33332 Gütersloh (DE); Monkenbusch, Robin, 33378 Rheda-Wiedenbrück (DE)
(74) Vertreter: CLAAS Gruppe

(57) **Zusammenfassung**

Die Erfindung betrifft ein Schwarmassistenzsystem zum Planen und Steuern des Einsatzes mindestens einer autonomen landwirtschaftlichen Universal-Arbeitsmaschine (4), wobei das Schwarmassistenzsystem (8) eingerichtet ist, die Durchführung einer landwirtschaftlichen Arbeitsaufgabe umfassend mindestens eine Hauptaufgabe und mindestens eine Nebenaufgabe zu unterstützen, wobei die Hauptaufgabe von einer landwirtschaftlichen Arbeitsmaschine (2) durchgeführt wird, wobei das Schwarmassistenzsystem (8) eingerichtet ist, mit mindestens einer autonomen landwirtschaftlichen Universal-Arbeitsmaschine (4) zu kommunizieren, wobei das Schwarmassistenzsystem (8) eingerichtet ist, der autonomen landwirtschaftlichen Universal-Arbeitsmaschine (4) eine der Nebenaufgaben zur Durchführung zuzuweisen und die Durchführung der Nebenaufgabe zu unterstützen.

## Beschreibung

Die vorliegende Erfindung betrifft ein Schwarmassistenzsystem zum Planen und Steuern des Einsatzes mindestens einer autonomen landwirtschaftlichen Universal-Arbeitsmaschine gemäß Anspruch 1 sowie ein Verfahren zum Planen und Steuern des Einsatzes mindestens einer autonomen landwirtschaftlichen Universal-Arbeitsmaschine gemäß Anspruch 13 sowie eine autonome landwirtschaftliche Universal-Arbeitsmaschine gemäß Anspruch 14 sowie ein Computerprogrammprodukt gemäß Anspruch 15.

Autonome Fahrzeuge sind auf dem Gebiet des Straßenverkehrs inzwischen allgemein bekannt. Grundsätzlich bekannt sind unterschiedliche Autonomiestufen, von kleineren technischen Unterstützungen eines menschlichen Fahrers bis hin zu den vorliegend unter "autonom" verstandenen Fahrzeugen, die rechtlich und technisch ohne direkte menschliche Überwachung komplexe Fahraufgaben bewältigen können und dürfen.

Neben den bekannten autonomen Kraftfahrzeugen werden auch Autonomiesierungsansätze in anderen Bereichen verfolgt. Hier werden konkret autonome landwirtschaftliche Arbeitsmaschinen betrachtet. Autonome landwirtschaftliche Arbeitsmaschinen ähneln zwar konzeptionell den autonomen Kraftfahrzeugen, insgesamt sind sie jedoch deutlich unterschiedlich zu betrachten. Autonome landwirtschaftliche Arbeitsmaschinen dienen nicht dem Transport von Personen, sondern allgemein der Durchführung landwirtschaftlicher Arbeitsaufgaben.

Grundsätzlich kann zwischen zwei Konzepten autonomer landwirtschaftlicher Arbeitsmaschinen unterschieden werden. Die autonomen landwirtschaftlichen Arbeitsmaschinen können einerseits spezialisiert sein, wie es beispielsweise ein autonomer Mähdrescher oder gar ein autonomer Weizen-Mähdrescher wäre, oder andererseits generalisiert. Derartige generalisierte autonome landwirtschaftliche Arbeitsmaschinen als autonome landwirtschaftliche Universal-Arbeitsmaschinen stehen hier im Fokus. Diese autonomen landwirtschaftlichen Universal-Arbeitsmaschinen zeichnen sich dadurch aus, dass sie durch wechselnde Konfigurationen wie wechselnde Arbeitsaggregate und wechselnde Softwarebausteine für eine Vielzahl unterschiedlicher landwirtschaftlicher Arbeitsaufgaben verwendet werden können.

Derartige autonome landwirtschaftliche Universal-Arbeitsmaschinen haben insbesondere entscheidende Vorteile hinsichtlich ihrer Auslastung und Anschaffungskosten, weisen jedoch den Nachteil auf, dass sie technisch, insbesondere softwareseitig, anspruchsvoller sind. Ein KI-Modell, das darauf trainiert ist, mit immer derselben technischen Ausstattung immer nur Weizen zu ernten, ist technisch einfacher realisierbar als ein KI-Modell, das jegliche landwirtschaftliche Arbeitsaufgabe mit beliebiger Ausstattung erledigen kann.

Autonome landwirtschaftliche Universal-Arbeitsmaschinen können landwirtschaftliche Arbeitsaufgaben weitgehend selbstständig abarbeiten. Nachteilig ist dabei jedoch, dass ihnen noch immer diverse Anweisungen zu den Rahmenbedingungen der landwirtschaftlichen Arbeitsaufgaben, die landwirtschaftlichen Arbeitsaufgaben selbst und dergleichen vorgegeben werden müssen. Führt ein Nutzer als Fahrer einer nicht-autonomen landwirtschaftlichen Arbeitsmaschine eine landwirtschaftliche Arbeitsaufgabe durch, kostet es ihn wertvolle Zeit und Aufmerksamkeit, Aufgaben an die autonome landwirtschaftliche Universal-Arbeitsmaschine zu verteilen, die Randbedingungen der Aufgaben vorzugeben und die Durchführung der Aufgaben zu überwachen. Wird eine landwirtschaftliche Arbeitsaufgabe primär von einer autonomen landwirtschaftlichen Arbeitsmaschine durchgeführt, ist bestenfalls gar kein Nutzer anwesend. In diesem Fall müssen weitere Aufgaben für weitere autonome landwirtschaftliche Universal-Arbeitsmaschinen anderweitig verteilt werden, beispielsweise durch eine detaillierte Vorab-Planung.

Für bemannte landwirtschaftliche Arbeitsmaschinen ist das Prinzip bekannt, Datensätze mittels eines Datenkonfigurators so zusammenzustellen, dass sie ganz spezifisch auf die Bedürfnisse einer landwirtschaftlichen Arbeitsmaschine zugeschnitten sind (DE 10 2006 030 970 A1).

Weiter ist bekannt, verfügbare Maschinenressourcen in Bezug auf Erntezeitfenster unterschiedlicher Akteure frühzeitig und abgestimmt zu verplanen (DE 10 2006 045 280 A1).

Zudem ist bekannt, dass die Planung von Maschinenressourcen in Stufen erfolgen kann und ausgehend von einer frühen Grobplanung über eine kurz vor Einsatzbeginn liegende Feldplanung zu einer einsatzspezifischen Feinplanung übergeht (EP 2 174 537 A1).

Eine grundlegende Kommunikationsstruktur zwischen verschiedenen Akteuren bei der Abarbeitung einer landwirtschaftlichen Arbeitsaufgabe ist aus EP 1 619 517 BA bekannt.

Es ist eine Herausforderung, bekannte autonome landwirtschaftliche Universal-Arbeitsmaschinen effizient einzusetzen.

Das obige Problem wird durch die Merkmale von Anspruch 1 gelöst.

Wesentlich ist die grundsätzliche Überlegung, dass ein Schwarmassistenzsystem vorgesehen sein kann, das bei der Durchführung einer landwirtschaftlichen Arbeitsaufgabe umfassend mindestens eine Hauptaufgabe und mindestens eine Nebenaufgabe mindestens eine autonome landwirtschaftliche Universal-Arbeitsmaschine einer Nebenaufgabe zuordnet und die Durchführung der Nebenaufgabe unterstützt. So kann ein Nutzer oder eine autonome landwirtschaftliche Arbeitsmaschine, der bzw. die die Hauptaufgabe durchführt entlastet und automatisch unterstützt werden. Die autonome landwirtschaftliche Universal-Arbeitsmaschine wiederum kann für vielfältige Tätigkeiten eingesetzt werden, deren Notwendigkeit sich ggf. auch erst spontan ergibt.

Im Einzelnen wird ein Schwarmassistenzsystem zum Planen und Steuern des Einsatzes mindestens einer autonomen landwirtschaftlichen Universal-Arbeitsmaschine vorgeschlagen, wobei das Schwarmassistenzsystem eingerichtet ist, die Durchführung einer landwirtschaftlichen Arbeitsaufgabe umfassend mindestens eine Hauptaufgabe und mindestens eine Nebenaufgabe zu unterstützen, wobei die Hauptaufgabe von einer landwirtschaftlichen Arbeitsmaschine durchgeführt wird, wobei das Schwarmassistenzsystem eingerichtet ist, mit mindestens einer autonomen landwirtschaftlichen Universal-Arbeitsmaschine zu kommunizieren, wobei das Schwarmassistenzsystem eingerichtet ist, der autonomen landwirtschaftlichen Universal-Arbeitsmaschine eine der Nebenaufgaben zur Durchführung zuzuweisen und die Durchführung der Nebenaufgabe zu unterstützen.

Bei einer Ausgestaltung gemäß Anspruch 2 ist vorgesehen, dass das Schwarmassistenzsystem selbsttätig einen Bedarf erkennt, daraus eine Nebenaufgabe ableitet und diese der autonomen landwirtschaftlichen Universal-Arbeitsmaschine zur Durchführung zuweist. Auf diese Art und Weise kann der Nutzer weiter entlastet werden und es können insbesondere auch spontan anfallende Nebenaufgaben von der autonomen landwirtschaftlichen Universal-Arbeitsmaschine bewältigt werden.

Gemäß Anspruch 3 stellt das Schwarmassistenzsystem der autonomen landwirtschaftlichen Universal-Arbeitsmaschine Prozesswissen zur Durchführung der Nebenaufgabe zur Verfügung. Dieses Prozesswissen kann das Schwarmassistenzsystem vorzugsweise nach Bedarf ermitteln. Das Ermitteln und zur Verfügung stellen des Prozesswissens durch das Schwarmassistenzsystem ermöglicht die Nutzung der autonomen landwirtschaftlichen Universal-Arbeitsmaschine für nahezu beliebige landwirtschaftliche Arbeitsaufgaben. Es wird möglich, die autonome landwirtschaftliche Universal-Arbeitsmaschine für jede der Nebenaufgaben zu individualisieren. So muss die autonome landwirtschaftliche Universal-Arbeitsmaschine nicht Prozesswissen für alle möglichen denkbaren Tätigkeiten vorhalten und zusätzlich kann das Prozesswissen mit aktuellen Informationen über die landwirtschaftliche Arbeitsaufgabe, das Umfeld usw. angereichert werden.

Bei einer Ausgestaltung gemäß Anspruch 4 umfasst das Schwarmassistenzsystem eine App für ein Mobilgerät und/oder für die die Hauptaufgabe durchführende landwirtschaftliche Arbeitsmaschine. Beide Möglichkeiten sind insbesondere dann interessant, wenn die die Hauptaufgabe durchführende landwirtschaftliche Arbeitsmaschine von einem Nutzer gesteuert wird und dieser so schnell und unkompliziert Zugriff auf das Schwarmassistenzsystem hat. Alternativ oder zusätzlich kann das Schwarmassistenzsystem eine Serveranwendung umfassen. Eine Serveranwendung vereinfacht den Zugriss auf diverse historische und aktuelle Daten zur landwirtschaftlichen Arbeitsaufgabe, dem Umfeld, den beteiligten landwirtschaftlichen Arbeitsmaschinen usw. Außerdem kann auf einem Server ausreichend Rechenleistung zur Verfügung gestellt werden.

Die Ansprüche 5 und 6 geben bevorzugte Ausgestaltungen der Hauptaufgabe und der Nebenaufgaben an. Eine besonders bevorzugte Nebenaufgabe, nämlich die Wildsuche, ist Gegenstand von Anspruch 7. Eine autonome landwirtschaftliche Universal-Arbeitsmaschine wird in aller Regel mit diversen Sensoren ausgestattet sein. Ist beispielsweise eine Ernte im Laufe des Tages auf einem Feld geplant, kann die autonome landwirtschaftliche Universal-Arbeitsmaschine schon im Voraus losgeschickt werden, um das Feld nach Wild abzusuchen und insbesondere dieses zu verschrecken. Vorteilhafterweise ist dafür wenig oder kein spezifisches Prozesswissen und kein Arbeitsaggregat notwendig, sodass die Wildsuche prinzipiell ohne menschlichen Eingriff stattfinden könnte. Des Weiteren kann sie bis zu einem gewissen Grad zeitlich entkoppelt von der Hauptaufgabe, beispielsweise der Ernte, stattfinden.

Bei einer weiteren bevorzugten Ausgestaltung gemäß Anspruch 8 ist vorgesehen, dass das Schwarmassistenzsystem mehrere Nebenaufgaben für eine oder mehrere autonome landwirtschaftliche Universal-Arbeitsmaschinen plant. So kann das Schwarmassistenzsystem während einer oder mehrerer landwirtschaftlicher Arbeitsaufgaben umfassend unterstützen.

Anspruch 9 gibt mehrere bereits angesprochene Ausgestaltungen an. Interessant ist dabei auch die Möglichkeit, dass die Hauptaufgabe von einem Verbund autonomer landwirtschaftlicher Arbeitsmaschinen inklusive autonomer landwirtschaftlicher Universal-Arbeitsmaschinen durchgeführt werden kann. Grundsätzlich kann das Schwarmassistenzsystem, wie in Anspruch 10 ausgeführt, auch bei der Hauptaufgabe unterstützen, insbesondere Prozesswissen zur Verfügung stellen. Auf diese Art und Weise laufen alle Informationen über die landwirtschaftliche Arbeitsaufgabe bei dem Schwarmassistenzsystem zusammen. Somit kann dieses besonders gut die Nebenaufgaben verteilen.

Die Ansprüche 11 und 12 betreffen Ausgestaltungen des Schwarmassistenzsystems, bei denen dieses eingerichtet ist, Abweichungen und/oder unerwartete Zustände, insbesondere Notfälle festzustellen und darauf zu reagieren. Das Schwarmassistenzsystem kann diverse Informationen aufweisen und sammeln, die den autonomen landwirtschaftlichen Arbeitsmaschinen vor Ort nicht oder nicht vollständig zur Verfügung stehen. So kann es einige Abweichungen vom Normalzustand schneller und/oder präziser erkennen.

Nach einer weiteren Lehre gemäß Anspruch 13, der eigenständige Bedeutung zukommt, wird ein Verfahren zum Planen und Steuern des Einsatzes mindestens einer autonomen landwirtschaftlichen Universal-Arbeitsmaschine mittels eines Schwarmassistenzsystems, wobei das Schwarmassistenzsystem die Durchführung einer landwirtschaftlichen Arbeitsaufgabe umfassend mindestens eine Hauptaufgabe und mindestens eine Nebenaufgabe unterstützt, wobei die Hauptaufgabe von einer landwirtschaftlichen Arbeitsmaschine durchgeführt wird, wobei das Schwarmassistenzsystem mit mindestens einer autonomen landwirtschaftlichen Universal-Arbeitsmaschine kommuniziert, wobei das Schwarmassistenzsystem der autonomen landwirtschaftlichen Universal-Arbeitsmaschine eine der Nebenaufgabe zur Durchführung zuweist und die Durchführung der Nebenaufgabe unterstützt, beansprucht.

Auf alle Ausführungen zu dem vorschlagsgemäßen Schwarmassistenzsystem darf verwiesen werden.

Nach einer weiteren Lehre gemäß Anspruch 14, der ebenfalls eigenständige Bedeutung zukommt, wird eine autonome landwirtschaftliche Universal-Arbeitsmaschine eingerichtet zur Verwendung in dem vorschlagsgemäßen Verfahren beansprucht.

Auf alle Ausführungen zu dem vorschlagsgemäßen Schwarmassistenzsystem und dem vorschlagsgemäßen Verfahren darf verwiesen werden.

Nach einer weiteren Lehre gemäß Anspruch 15, der ebenfalls eigenständige Bedeutung zukommt, wird ein Computerprogrammprodukt umfassend Befehle, die bei ihrer Ausführung eine Recheneinheit veranlassen, als vorschlagsgemäßes Schwarmassistenzsystem zu funktionieren, beansprucht.

Auf alle Ausführungen zu dem vorschlagsgemäßen Schwarmassistenzsystem, dem vorschlagsgemäßen Verfahren und der vorschlagsgemäßen autonomen landwirtschaftlichen Universal-Arbeitsmaschine darf verwiesen werden.

Im Folgenden wird die Erfindung anhand einer lediglich Ausführungsbeispiele darstellenden Zeichnung näher erläutert. In der Zeichnung zeigt
- Fig. 1: die Durchführung einer landwirtschaftlichen Arbeitsaufgabe mit einer Hauptaufgabe und mehrere Nebenaufgaben,
- Fig. 2: ebenfalls die Durchführung einer landwirtschaftlichen Arbeitsaufgabe mit einer Hauptaufgabe und mehrere Nebenaufgaben und
- Fig. 3: zwei autonome landwirtschaftliche Universal-Arbeitsmaschinen, die als Feldhäcksler zusammenarbeiten.

Ein beispielhafter Anwendungsfall ist vorliegend ein Erntevorgang als zu erbringende landwirtschaftliche Arbeitsleistung. Dieser Erntevorgang umfasst beispielhaft die Prozesskette aus den landwirtschaftlichen Arbeitsaufgaben "Abernten eines Feldbestandes" und "Bergung des Erntegutes".

In der Regel wird diese Prozesskette so abgearbeitet, dass zunächst ein oder mehrere als Mähdrescher 1 ausgeführte landwirtschaftliche Arbeitsmaschinen 2 den auf einer Anbaufläche gewachsenen Feldbestand abernten. Beispielhaft wird der von den Fruchtständen gebildete Teil des Erntegutes auf dem Mähdrescher 1 in einem Korntank zwischengespeichert während der verbleibende Teil des Erntegutes, das Stroh, in Schwaden auf der Anbaufläche abgelegt wird. Hat das in Schwaden abgelegte Stroh einen die Einlagerung des Strohs zulassenden Feuchtegehalt erreicht, verpresst eine von einem Schlepper gezogene Ballenpresse das Stroh zu Erntegutballen, die zunächst auf der Anbaufläche abgelegt werden.

In einem weiteren Arbeitsgang der Prozesskette werden die Erntegutballen beispielsweise mittels sogenannter Hubstapler auf von Schleppern gezogene Pritschenanhänger verladen und zur Einlagerung abtransportiert. In analoger Weise werden die im Korntank zwischengespeicherten Fruchtstände von schleppergezogenen Transportanhängern 3 übernommen und zur Einlagerung oder Weiterverarbeitung geführt. Vorliegend kann das Ernten beispielsweise die Hauptaufgabe sein, die zeitnah durch die Verwendung einer Ballenpresse und den Abtransport der Ballen als Nebenaufgaben unterstützt werden soll. Auch das Ziehen der Transportanhänger 3 kann eine Nebenaufgabe sein.

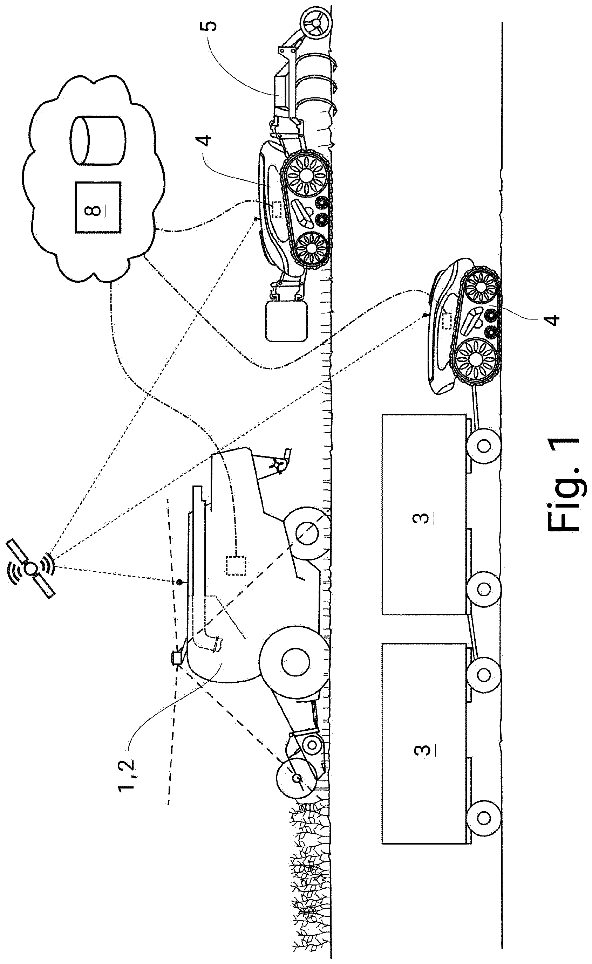

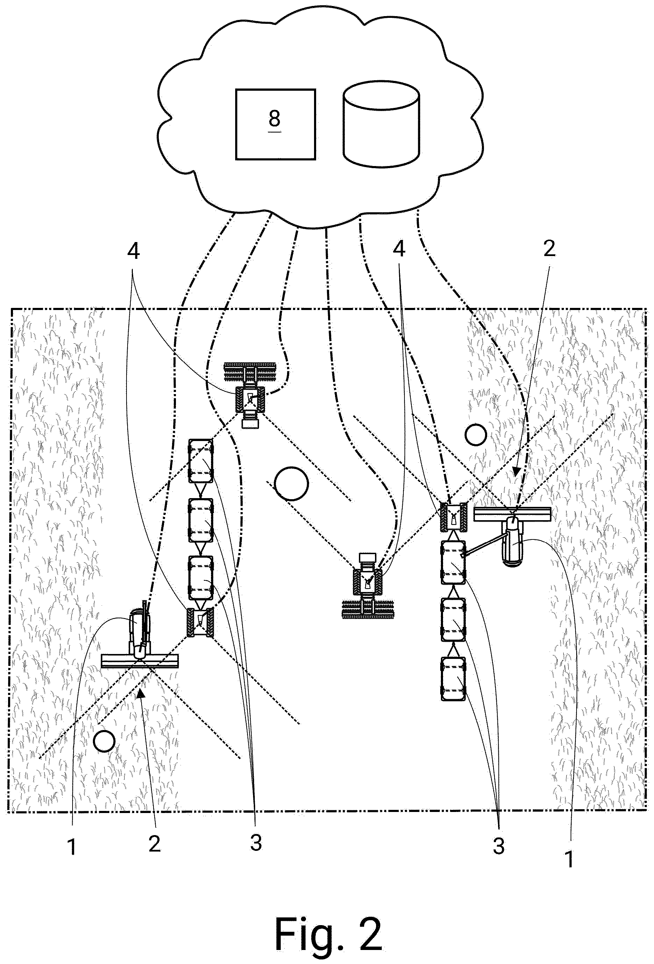

Im vorliegenden Fall können nun eine oder mehrere dieser Tätigkeiten von autonomen landwirtschaftlichen Universal-Arbeitsmaschinen 4 in unterschiedlichen Konfigurationen übernommen werden. Fig. 2 zeigt beispielsweise die Zusammenarbeit von vier autonomen landwirtschaftlichen Universal-Arbeitsmaschinen 4 und zwei autonomen Mähdreschern 1 bei der Ernte. Fig. 1 zeigt ebenfalls eine Zusammenarbeit zwischen autonomen landwirtschaftlichen Universal-Arbeitsmaschinen 4 und einem Mähdrescher 1.

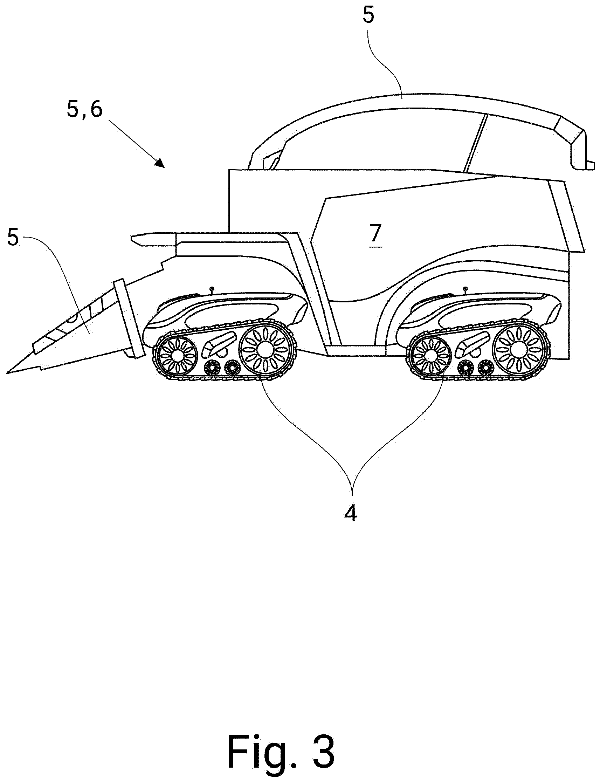

Alternativ ist auch denkbar, dass die autonomen landwirtschaftlichen Universal-Arbeitsmaschinen 4 durch Konfigurationsänderungen, also insbesondere durch Ausstattung mit entsprechenden Arbeitsaggregaten 5, als Feldhäcksler 6 verwendet werden. Denkbar ist beispielsweise, dass ein Rumpf-Feldhäcksler 7 als Arbeitsaggregat 5 mit wenig Elektronik und ohne Fahrantrieb mittels einer oder mehrerer autonomer landwirtschaftlicher Universal-Arbeitsmaschinen 4 betrieben wird, indem die autonomen landwirtschaftlichen Universal-Arbeitsmaschinen 4 als Fahrantrieb und Steuerung dienen und an den Rumpf-Feldhäcksler 7 andockbar sind. Eine derartige Ausgestaltung zeigt Fig. 3, in der zwei autonome landwirtschaftliche Universal-Arbeitsmaschinen 4 einen Rumpf-Feldhäcksler 7 antreiben, teilweise steuern, mit Energie versorgen und so gemeinsam als Feldhäcksler 6 fungieren.

Vorgeschlagen wird im Einzelnen ein Schwarmassistenzsystem 8 zum Planen und Steuern des Einsatzes mindestens einer autonomen landwirtschaftlichen Universal-Arbeitsmaschine 4.

Das Schwarmassistenzsystem 8 eingerichtet ist, die Durchführung einer landwirtschaftlichen Arbeitsaufgabe umfassend mindestens eine Hauptaufgabe und mindestens eine Nebenaufgabe zu unterstützen.

Die Hauptaufgabe wird, wie in den Figuren 1 und 2 dargestellt, von einer landwirtschaftlichen Arbeitsmaschine 2 durchgeführt. Bei dieser kann es sich um eine autonome landwirtschaftliche Arbeitsmaschine 2 handeln, jedoch ebenfalls um eine bemannte landwirtschaftliche Arbeitsmaschine 2 wie einen üblichen Mähdrescher 1, Feldhäcksler 6, Traktor oder dergleichen.

Das Schwarmassistenzsystem 8 ist eingerichtet, mit mindestens einer autonomen landwirtschaftlichen Universal-Arbeitsmaschine 4 zu kommunizieren und der autonomen landwirtschaftlichen Universal-Arbeitsmaschine 4 eine der Nebenaufgaben zur Durchführung zuzuweisen und die Durchführung der Nebenaufgabe zu unterstützen. Auf diese Art und Weise kann beispielsweise erreicht werden, dass ein Fahrer der bemannten landwirtschaftlichen Arbeitsmaschine 2 von der Betreuung einer oder mehrerer autonomer landwirtschaftlicher Universal-Arbeitsmaschinen 4 entlastet wird.

Bei einer autonomen landwirtschaftlichen Universal-Arbeitsmaschine 4 handelt es sich um eine Arbeitsmaschine, die autonom, also ohne engmaschige Nutzerüberwachung und auf Basis eigener Aktionen eine landwirtschaftliche Arbeitsaufgabe ausführen kann. Hier handelt es sich bei der autonomen landwirtschaftlichen Universal-Arbeitsmaschine 4 um eine unbemannte Arbeitsmaschine. Sie kann alleine oder im Verbund, insbesondere mit einer bemannten landwirtschaftlichen Arbeitsmaschine 2 tätig sein. So kann sie die autonome landwirtschaftliche Arbeitsmaschine 2 beispielsweise entlang einer Fahrspur einer bemannten landwirtschaftlichen Arbeitsmaschine 2 bewegen oder aber anhand von GPS-Daten selbsttätig ihre Fahrspur ermittelt.

Weiterhin ist die autonome landwirtschaftliche Universal-Arbeitsmaschine 4 zur Durchführung einer Vielzahl unterschiedlicher landwirtschaftlicher Arbeitsaufgaben konfigurierbar, insbesondere durch den Austausch bzw. das Anbringen von Arbeitsaggregaten 5.

Vorzugsweise kann vorgesehen sein, dass bei einer autonomen landwirtschaftlichen Universal-Arbeitsmaschine 4 bei einem Wechsel des Arbeitsaggregats 5 zusätzlich ein Wechsel von Steuerungsbaugruppen erfolgt, die das Arbeitsaggregat 5 betreffen, oder, dass Steuerungsbaugruppen hinzugefügt werden. Auch möglich ist, dass zwei oder mehr als zwei autonome landwirtschaftliche Universal-Arbeitsmaschinen 4 gemeinsam ein Arbeitsaggregat 5 betreiben (Fig. 3), also dass beispielsweise zwei autonome landwirtschaftliche Universal-Arbeitsmaschinen 4 zusammen mit einer größeren Tragstruktur mit diversen Arbeitsaggregaten 5 als Feldhäcksler 6, Mähdrescher 1 oder anderes fungieren.

Das Schwarmassistenzsystem 8 kann eine zentrale Serveranwendung sein, bei der alle Kommunikation zusammenläuft, genauso ist aber auch ein dezentrales Schwarmassistenzsystem 8 oder eine Mischform möglich. Hier und vorzugsweise steht das Schwarmassistenzsystem 8 mit einem Farm Management Information System in Verbindung oder ist ein Teil davon.

Das Schwarmassistenzsystem 8 umfasst Hardware, insbesondere eine Recheneinheit. Das Schwarmassistenzsystem 8 kann rein cloudbasiert oder rein lokal ausgestaltet sein oder mehrere Recheneinheiten umfassen. In einer hier nicht näher beleuchteten Variante ist das Schwarmassistenzsystem 8 vollständig auf der autonomen landwirtschaftlichen Universal-Arbeitsmaschine 4 angeordnet und dort als Modul ausgestaltet, das mit der Steuerung der autonomen landwirtschaftlichen Universal-Arbeitsmaschine 4 kommuniziert, jedoch software- und vorzugsweise hardwaretechnisch von dieser getrennt ausgestaltet ist. Hier ist das Schwarmassistenzsystem 8 extern zu der autonomen landwirtschaftlichen Universal-Arbeitsmaschine 4 angeordnet.

Die autonomen landwirtschaftlichen Universal-Arbeitsmaschinen 4 können alleine oder als Verbund die landwirtschaftliche Arbeitsaufgabe und/oder die Hauptaufgabe und/oder die Nebenaufgabe durchführen. Der Verbund kann vollständig aus autonomen landwirtschaftlichen Universal-Arbeitsmaschinen 4 bestehen. Hier und vorzugsweise kann der Verbund jedoch auch nicht-autonome landwirtschaftliche Arbeitsmaschinen 2 umfassen, die keine Universal-Arbeitsmaschinen 4 sind. Fig. 2 zeigt beispielsweise einen Verbund aus autonomen landwirtschaftlichen Universal-Arbeitsmaschinen 4 und Mähdreschern 1. Hier und vorzugsweise kann vorgesehen sein, dass das Schwarmassistenzsystem 8 auch autonome landwirtschaftliche Arbeitsmaschinen 2 unterstützt, die keine Universal-Arbeitsmaschinen 4 sind. Insbesondere kann das Schwarmassistenzsystem 8 Verbünde aus autonomen landwirtschaftlichen Universal-Arbeitsmaschinen 4 und anderen autonomen landwirtschaftlichen Arbeitsmaschinen 2 unterstützen.

Hier und vorzugsweise koordiniert das Schwarmassistenzsystem 8 den Verbund. Dafür kann das Schwarmassistenzsystem 8 die Kommunikation zwischen den autonomen landwirtschaftlichen Arbeitsmaschinen 2 des Verbundes regeln, insbesondere kann die Kommunikation über das Schwarmassistenzsystem 8 stattfinden.

Weiter ist hier und vorzugsweise vorgesehen, dass das Schwarmassistenzsystem 8 eingerichtet ist, einen vorhandenen Bedarf an Unterstützung bei der Hauptaufgabe zu erkennen, die Nebenaufgabe abhängig von dem vorhandenen Bedarf bei der landwirtschaftlichen Arbeitsaufgabe zu ermitteln, der autonomen landwirtschaftlichen Universal-Arbeitsmaschine 4 die Nebenaufgabe zur Durchführung zuzuweisen und die Durchführung der Nebenaufgabe zu unterstützen.

Das Schwarmassistenzsystem 8 kann den Bedarf aus in der Vergangenheit von einem Nutzer angestoßenen Nebenaufgaben lernen oder mit Expertenwissen zu diversen landwirtschaftlichen Arbeitsaufgaben ausgestattet sein. Es können diverse Triggerevents im Schwarmassistenzsystem 8 hinterlegt sein, die eine Nebenaufgabe auslösen. Das Schwarmassistenzsystem 8 kann die Durchführung der Nebenaufgabe beispielsweise anhand von Sensordaten der autonomen landwirtschaftlichen Universal-Arbeitsmaschine 4 überwachen und bei Abweichungen reagieren.

Das Schwarmassistenzsystem 8 kann eingerichtet sein, die Durchführung der Nebenaufgabe zu unterstützen, indem das Schwarmassistenzsystem 8 der autonomen landwirtschaftlichen Universal-Arbeitsmaschine 4 Prozesswissen für die Durchführung der Nebenaufgabe übermittelt. Die autonome landwirtschaftliche Universal-Arbeitsmaschine 4 nutzt das Prozesswissen, um die Nebenaufgabe durchzuführen.

Vorzugsweise ist es so, dass das Schwarmassistenzsystem 8 eingerichtet ist, das Prozesswissen aus von der die Hauptaufgabe durchführenden landwirtschaftlichen Arbeitsmaschine 2 erhaltenen Prozessdaten und/oder von einem Farm Management Information System erhalten Prozessdaten und/oder allgemeinen Prozessdaten zu ermitteln. Sofern das Schwarmassistenzsystem 8 Teil eines Farm Management Information Systems ist, kann es die Daten aus dem Farm Management Information System im Übrigen abrufen. Die Prozessdaten können allgemeine Prozessdaten und/oder die angefragte Arbeitsaufgabe betreffende spezifischen Prozessdaten umfassen. Weiter kann das Schwarmassistenzsystem 8 bei der Ermittlung des Prozesswissens auch Umweltdaten berücksichtigen.

Derartiges Prozesswissen kann optimierte Einstellungen von Maschinenparametern und/oder Parametrisierungen von Softwaremodulen und/oder Gewichte von neuronalen Netzwerken und/oder eine Routenplanung und/oder eine Optimierungsstrategie oder dergleichen umfassen. Die spezifischen Prozessdaten umfassen beispielsweise Feldinformationsdaten wie eine Fruchtart eines Feldbestandes und/oder eine Bodenart und/oder eine Bodensteigung und/oder feldunabhängige Prozessdaten wie vorhandene Betriebsmittel und/oder vorhergehende und/oder nachfolgende Arbeitsschritte. Die allgemeinen Prozessdaten umfassen unspezifische Prozessdaten wie beispielsweise optimierte Einstellungen der autonomen landwirtschaftlichen Universal-Arbeitsmaschine 4 für einen Erntevorgang. Umweltdaten sind solche Daten, die nicht direkt das Feld betreffen, sondern allgemein eine größere Umgebung, beispielsweise Wetterdaten, Temperaturdaten und dergleichen. Das Prozesswissen wird von der autonomen landwirtschaftlichen Universal-Arbeitsmaschine 4 zur Durchführung der Nebenaufgabe oder allgemein einer landwirtschaftlichen Arbeitsaufgabe genutzt, insbesondere nutzt die autonome landwirtschaftliche Universal-Arbeitsmaschine 4 das Prozesswissen, um damit Maschinenparameter einzustellen.

Hier und vorzugsweise umfasst das Prozesswissen zumindest für einige, vorzugsweise für alle, Arbeitsaggregate 5, mit denen die autonome landwirtschaftliche Universal-Arbeitsmaschine 4 ausgerüstet werden kann, arbeitsaggregatspezifisches Arbeitsaggregatwissen. Hier und vorzugsweise ist es dann so, dass die autonome landwirtschaftliche Universal-Arbeitsmaschine 4 für einige oder alle Arbeitsaggregate 5, mit denen sie ausgerüstet werden kann, jedenfalls in einer Grund- oder Werkskonfiguration, kein arbeitsaggregatspezifisches Arbeitsaggregatwissen aufweist. Alternativ kann die autonome landwirtschaftliche Universal-Arbeitsmaschine 4 für einige oder alle Arbeitsaggregate 5, mit denen sie ausgerüstet werden kann, jedenfalls in der Grund- oder Werkskonfiguration, arbeitsaggregatstypspezifisches Arbeitsaggregatwissen aufweisen. So kann die autonome landwirtschaftliche Universal-Arbeitsmaschine 4 beispielsweise einen grundsätzlichen Satz an pflugspezifischem Arbeitsaggregatwissen aufweisen, jedoch von dem Schwarmassistenzsystem 8 mit Arbeitsaggregatwissen betreffend den exakten Pflugtyp ausgestattet werden, das eine effizientere Verwendung des Pfluges erlaubt.

Vorzugsweise ist daher vorgesehen, dass die autonome landwirtschaftliche Universal-Arbeitsmaschine 4 derart ausgestaltet ist, dass sie ohne das arbeitsaggregatspezifische Arbeitsaggregatwissen das jeweilige Arbeitsaggregat 5 nicht oder nur auf Basis des arbeitsaggregatstypspezifischen Arbeitsaggregatwissen verwenden kann.

Bei den Maschinenparametern kann es sich um Maschinenparameter im engen Sinne wie die Motordrehzahl oder eine Position einer Drosselklappe handeln. Ebenso sind Einstellungen eines Heckkrafthebers oder dergleichen umfasst. Die Maschinenparameter können auch Anweisungen an Einstellautomaten oder andere Steuerungssysteme der autonomen landwirtschaftlichen Universal-Arbeitsmaschine 4 umfassen, aus denen dann Maschinenparameter im engen Sinne generiert werden.

Die autonome landwirtschaftliche Universal-Arbeitsmaschine 4 kann in der bevorzugten Ausgestaltung also als eine unintelligente Drohne betrachtet werden, die im Wesentlichen vom Schwarmassistenzsystem 8 gesteuert wird.

Ebenfalls kann vorgesehen sein, dass das Schwarmassistenzsystem 8 eine App für ein Mobilgerät und/oder für die die Hauptaufgabe durchführende landwirtschaftliche Arbeitsmaschine 2 umfasst, und/oder, dass das Schwarmassistenzsystem 8 eine Serveranwendung umfasst, mit der die autonome landwirtschaftliche Universal-Arbeitsmaschine 4 und/oder die App über das Internet kommuniziert.

Die App weist vorzugsweise ein Benutzerinterface, insbesondere für einen Fahrer der landwirtschaftlichen Arbeitsmaschine 2, die die Hauptaufgabe durchführt, auf, mit dem der Fahrer dem Schwarmassistenzsystem 8 Anweisungen erteilen kann. Diese Anweisungen können ein Anstoßen oder ein Stoppen einer Nebenaufgabe umfassen. Der Fahrer kann auf die App beispielsweise über sein Smartphone oder ein Terminal seiner landwirtschaftlichen Arbeitsmaschine 2 zugreifen.

Weiter ist hier und vorzugsweise vorgesehen, dass die Hauptaufgabe eine Feldbearbeitung sein oder umfassen kann, vorzugsweise, dass die Feldbearbeitung ein Pflügen und/oder eine Aussaat und/oder ein Düngen und/oder ein Erntevorgang und/oder eine Feldnachbearbeitung und/oder ein Ausbringen von Pflanzenschutzmitteln sein oder umfassen kann.

Hier und vorzugsweise ist vorgesehen, dass das Schwarmassistenzsystem 8 in unterschiedlichen Situationen unterschiedliche der genannten Aufgaben unterstützen kann und insgesamt eingerichtet ist, nicht zwingend gleichzeitig, mehrere der genannten Aufgaben zu unterstützten.

Zusätzlich oder alternativ kann vorgesehen sein, dass die autonome landwirtschaftliche Universal-Arbeitsmaschine 4 als Ballenpresse und/oder als Zugfahrzeug für Transportanhänger 3 genutzt werden kann, und/oder, dass die Nebenaufgabe beim Ernten das Transportieren und/oder Aufnehmen von Erntegut und/oder die Aufnahme abgelegter Strohschwade und/oder das Pressen von Ballen und/oder das Ablegen von Ballen und/oder eine Feldnachbearbeitung im Rahmen einer anderen Feldbearbeitung sein oder umfassen kann.

Die jeweils notwendig Ausstattung mit Arbeitsaggregaten 5 wird vorzugsweise vom Schwarmassistenzsystem 8 unterstützt und/oder geplant. Auch hier gilt, dass das Schwarmassistenzsystem 8 vorzugsweise derart eingerichtet ist, dass mehrere oder alle der genannten Aufgaben unterstützt werden können.

Weiter ist hier und vorzugsweise vorgesehen, dass das Schwarmassistenzsystem 8 eingerichtet ist, basierend auf einer Planung der Hauptaufgabe, insbesondere einer Tagesplanung eines Nutzers, als Nebenaufgabe ein Abfahren eines zu bearbeitenden Feldes zur Wildsuche zu planen und der autonomen landwirtschaftlichen Universal-Arbeitsmaschine 4 als Nebenaufgabe zuzuweisen.

Die Wildsuche ist ein besonders vorteilhaftes Beispiel einer durchführbaren Nebenaufgabe, da diese zeitlich entkoppelt von der Hauptaufgabe und ohne allzu detailliertes Prozesswissen durchgeführt werden kann. Vorzugsweise fährt die autonome landwirtschaftliche Universal-Arbeitsmaschine 4, insbesondere morgens vor der geplanten Feldbearbeitung, selbsttätig das zu bearbeitende Feld ab, insbesondere ohne dabei Arbeitsaggregate 5 mitzuführen. Dafür kann die autonome landwirtschaftliche Universal-Arbeitsmaschine 4 beispielsweise schon am Vorabend am Feld geparkt werden.

Ebenfalls kann das Schwarmassistenzsystem 8 eingerichtet sein, für eine oder mehrere autonome landwirtschaftliche Universal-Arbeitsmaschinen 4 mehrere Nebenaufgaben einer oder mehrerer landwirtschaftlicher Arbeitsaufgaben zu planen, die Nebenaufgaben der autonomen landwirtschaftlichen Universal-Arbeitsmaschine 4 zur Durchführung zuzuweisen und die Durchführung der Nebenaufgaben zu unterstützen. So wird ein kontinuierliche und/oder ausführlichere Unterstützung des Nutzers ermöglicht.

Weiter kann das Schwarmassistenzsystem 8 eingerichtet sein, einen zeitlichen und/oder örtlichen Ablauf und vorzugsweise eine Logistik der Nebenaufgaben zu planen. Insbesondere kann das Schwarmassistenzsystem 8 einen Transport der autonomen landwirtschaftlichen Universal-Arbeitsmaschine 4 zum Ort einer Nebenaufgabe rechtzeitig anstoßen.

Das Schwarmassistenzsystem 8 ist somit hier und vorzugsweise nicht nur für eine autonome landwirtschaftliche Universal-Arbeitsmaschine 4 zuständig, sondern für eine Vielzahl.

Weiter ist hier und vorzugsweise vorgesehen, dass die die Hauptaufgabe durchführende landwirtschaftliche Arbeitsmaschine 2 nicht autonom und/oder autonom jedoch nicht als Universal-Arbeitsmaschine 4 oder als autonome landwirtschaftliche Universal-Arbeitsmaschine 4 ausgestaltet sein kann, und/oder, dass die Hauptaufgabe von einem Verbund autonomer landwirtschaftlicher Arbeitsmaschinen 2 durchgeführt werden kann.

Unter einem Verbund wird eine miteinander kooperierende und kommunizierende Gruppe landwirtschaftlicher Arbeitsmaschinen 2 verstanden.

Zusätzlich oder alternativ kann vorgesehen sein, dass das Schwarmassistenzsystem 8 eingerichtet ist, zusätzliche eine die Hauptaufgabe durchführende autonome landwirtschaftliche Arbeitsmaschine 2, insbesondere Universal-Arbeitsmaschine 4, zu unterstützen, vorzugsweise der autonomen landwirtschaftlichen Arbeitsmaschine 2 Prozesswissen zu übermitteln und/oder die landwirtschaftliche Arbeitsaufgabe zu planen und zu überwachen.

Im Ergebnis kann somit die gesamte landwirtschaftliche Arbeitsaufgabe autonom, insbesondere nur von autonomen landwirtschaftlichen Universal-Arbeitsmaschinen 4, durchgeführt werden.

Ebenfalls ist vorzugsweise vorgesehen, dass das Schwarmassistenzsystem 8 eingerichtet ist, im Rahmen der Überwachung der Hauptaufgabe und/oder Nebenaufgabe eine Abweichung von der Planung festzustellen und durch Übermittlung einer Steueranweisung an mindestens eine der autonomen landwirtschaftlichen Universal-Arbeitsmaschinen 4 der Abweichung entgegenzuwirken.

Für die Überwachung kann das Schwarmassistenzsystem 8 auf Sensoren der landwirtschaftlichen Arbeitsmaschinen 2, insbesondere der autonomen landwirtschaftlichen Universal-Arbeitsmaschinen 4, und/oder Satellitendaten und/oder das Farm Management Information System und darin eine Live-Dokumentation zugreifen. Das Schwarmassistenzsystem 8 ermittelt, ob die Durchführung der Hauptaufgabe und/oder Nebenaufgabe einem Soll-Zustand entspricht und greift notwendigenfalls ein.

Weiter ist hier und vorzugsweise vorgesehen, dass das Schwarmassistenzsystem 8 eingerichtet ist, im Rahmen der Überwachung der Hauptaufgabe und/oder Nebenaufgabe einen unerwarteten Zustand festzustellen und eine Notfallroutine zur Reaktion auf den unerwarteten Zustand einzuleiten, vorzugsweise, dass das Schwarmassistenzsystem 8 eingerichtet ist, in der Notfallroutine eine Steueranweisung, insbesondere eine Stopp-Anweisung, an mindestens eine der autonomen landwirtschaftlichen Universal-Arbeitsmaschinen 4 zu übermitteln und/oder einen Nutzer zu informieren.

Die Stopp-Anweisung kann die Anweisung zum Stopp einer Fahrbewegung und/oder eines Arbeitsaggregats 5 umfassen.

Beansprucht wird außerdem gemäß einer weiteren Lehre, der eigenständige Bedeutung zukommt, ein Verfahren zum Planen und Steuern des Einsatzes mindestens einer autonomen landwirtschaftlichen Universal-Arbeitsmaschine 4 mittels eines Schwarmassistenzsystems 8, wobei das Schwarmassistenzsystem 8 die Durchführung einer landwirtschaftlichen Arbeitsaufgabe umfassend mindestens eine Hauptaufgabe und mindestens eine Nebenaufgabe unterstützt, wobei die Hauptaufgabe von einer landwirtschaftlichen Arbeitsmaschine 2 durchgeführt wird, wobei das Schwarmassistenzsystem 8 mit mindestens einer autonomen landwirtschaftlichen Universal-Arbeitsmaschine 4 kommuniziert, wobei das Schwarmassistenzsystem 8 der autonomen landwirtschaftlichen Universal-Arbeitsmaschine 4 eine der Nebenaufgabe zur Durchführung zuweist und die Durchführung der Nebenaufgabe unterstützt.

Auf alle Ausführungen zu dem vorschlagsgemäßen Schwarmassistenzsystem 8 darf verwiesen werden. Alle Verfahrensschritte, die hierin beschrieben sind, insbesondere die, zu deren Ausführung das Schwarmassistenzsystem 8 oder die autonome landwirtschaftliche Universal-Arbeitsmaschine 4 eingerichtet sind, können einzeln oder in beliebiger Kombination Gegenstand des Verfahrens sein.

Beansprucht wird außerdem gemäß einer weiteren Lehre, der eigenständige Bedeutung zukommt, eine autonome landwirtschaftliche Universal-Arbeitsmaschine 4 eingerichtet zur Verwendung in dem vorschlagsgemäßen Verfahren.

Auf alle Ausführungen zu dem vorschlagsgemäßen Verfahren und dem vorschlagsgemäßen Schwarmassistenzsystem 8 darf verwiesen werden.

Ebenso interessant ist vorliegend auch die Verwendung einer autonomen landwirtschaftlichen Universal-Arbeitsmaschine 4 in dem vorschlagsgemäßen Verfahren.

Beansprucht wird außerdem gemäß einer weiteren Lehre, der eigenständige Bedeutung zukommt, eine Computerprogrammprodukt umfassend Befehle, die bei ihrer Ausführung eine Recheneinheit veranlassen, als vorschlagsgemäßes Schwarmassistenzsystem 8 zu funktionieren.

Auf alle Ausführungen zu dem vorschlagsgemäßen Verfahren, dem vorschlagsgemäßen Schwarmassistenzsystem 8 und der vorschlagsgemäßen autonomen landwirtschaftlichen Universal-Arbeitsmaschine 4 darf verwiesen werden.

### Bezugszeichenliste

- 1: Mähdrescher
- 2: landwirtschaftliche Arbeitsmaschine
- 3: Transportanhänger
- 4: Universal-Arbeitsmaschine
- 5: Arbeitsaggregat
- 6: Feldhäcksler
- 7: Rumpf-Feldhäcksler
- 8: Schwarmassistenzsystem

## Patentansprüche

1. Schwarmassistenzsystem zum Planen und Steuern des Einsatzes mindestens einer autonomen landwirtschaftlichen Universal-Arbeitsmaschine (4), wobei das Schwarmassistenzsystem (8) eingerichtet ist, die Durchführung einer landwirtschaftlichen Arbeitsaufgabe umfassend mindestens eine Hauptaufgabe und mindestens eine Nebenaufgabe zu unterstützen,
wobei die Hauptaufgabe von einer landwirtschaftlichen Arbeitsmaschine (2) durchgeführt wird,
wobei das Schwarmassistenzsystem (8) eingerichtet ist, mit mindestens einer autonomen landwirtschaftlichen Universal-Arbeitsmaschine (4) zu kommunizieren,
wobei das Schwarmassistenzsystem (8) eingerichtet ist, der autonomen landwirtschaftlichen Universal-Arbeitsmaschine (4) eine der Nebenaufgaben zur Durchführung zuzuweisen und die Durchführung der Nebenaufgabe zu unterstützen.

2. Schwarmassistenzsystem nach Anspruch 1, **dadurch gekennzeichnet, dass** das Schwarmassistenzsystem (8) eingerichtet ist, einen vorhandenen Bedarf an Unterstützung bei der Hauptaufgabe zu erkennen, die Nebenaufgabe abhängig von dem vorhandenen Bedarf bei der landwirtschaftlichen Arbeitsaufgabe zu ermitteln, der autonomen landwirtschaftlichen Universal-Arbeitsmaschine (4) die Nebenaufgabe zur Durchführung zuzuweisen und die Durchführung der Nebenaufgabe zu unterstützen.

3. Schwarmassistenzsystem nach Anspruch 1 oder 2, **dadurch gekennzeichnet, dass** das Schwarmassistenzsystem (8) eingerichtet ist, die Durchführung der Nebenaufgabe zu unterstützen, indem das Schwarmassistenzsystem (8) der autonomen landwirtschaftlichen Universal-Arbeitsmaschine (4) Prozesswissen für die Durchführung der Nebenaufgabe übermittelt, vorzugsweise, dass das Schwarmassistenzsystem (8) eingerichtet ist, das Prozesswissen aus von der die Hauptaufgabe durchführenden landwirtschaftlichen Arbeitsmaschine (2) erhaltenen Prozessdaten und/oder von einem Farm Management Information System erhalten Prozessdaten und/oder allgemeinen Prozessdaten zu ermitteln.

4. Schwarmassistenzsystem nach einem der vorhergehenden Ansprüche, **dadurch gekennzeichnet, dass** das Schwarmassistenzsystem (8) eine App für ein Mobilgerät und/oder für die die Hauptaufgabe durchführende landwirtschaftliche Arbeitsmaschine (2) umfasst, und/oder, dass das Schwarmassistenzsystem (8) eine Serveranwendung umfasst, mit der die autonome landwirtschaftliche Universal-Arbeitsmaschine (4) und/oder die App über das Internet kommuniziert.

5. Schwarmassistenzsystem nach einem der vorhergehenden Ansprüche, **dadurch gekennzeichnet, dass** die Hauptaufgabe eine Feldbearbeitung sein oder umfassen kann, vorzugsweise, dass die Feldbearbeitung ein Pflügen und/oder eine Aussaat und/oder ein Düngen und/oder ein Erntevorgang und/oder eine Feldnachbearbeitung und/oder ein Ausbringen von Pflanzenschutzmitteln sein oder umfassen kann.

6. Schwarmassistenzsystem nach einem der vorhergehenden Ansprüche, **dadurch gekennzeichnet, dass** die autonome landwirtschaftliche Universal-Arbeitsmaschine (4) als Ballenpresse und/oder als Zugfahrzeug für Transportanhänger (3) genutzt werden kann, und/oder, dass die Nebenaufgabe beim Ernten das Transportieren und/oder Aufnehmen von Erntegut und/oder die Aufnahme abgelegter Strohschwade und/oder das Pressen von Ballen und/oder das Ablegen von Ballen und/oder eine Feldnachbearbeitung im Rahmen einer anderen Feldbearbeitung sein oder umfassen kann.

7. Schwarmassistenzsystem nach einem der vorhergehenden Ansprüche, **dadurch gekennzeichnet, dass** das Schwarmassistenzsystem (8) eingerichtet ist, basierend auf einer Planung der Hauptaufgabe, insbesondere einer Tagesplanung eines Nutzers, als Nebenaufgabe ein Abfahren eines zu bearbeitenden Feldes zur Wildsuche zu planen und der autonomen landwirtschaftlichen Universal-Arbeitsmaschine (4) als Nebenaufgabe zuzuweisen.

8. Schwarmassistenzsystem nach einem der vorhergehenden Ansprüche, **dadurch gekennzeichnet, dass** das Schwarmassistenzsystem (8) eingerichtet ist, für eine oder mehrere autonome landwirtschaftliche Universal-Arbeitsmaschinen (4) mehrere Nebenaufgaben einer oder mehrerer landwirtschaftlicher Arbeitsaufgaben zu planen, die Nebenaufgaben der autonomen landwirtschaftlichen Universal-Arbeitsmaschine (4) zur Durchführung zuzuweisen und die Durchführung der Nebenaufgaben zu unterstützen, vorzugsweise, dass das Schwarmassistenzsystem (8) eingerichtet ist, einen zeitlichen und/oder örtlichen Ablauf und vorzugsweise eine Logistik der Nebenaufgaben zu planen.

9. Schwarmassistenzsystem nach einem der vorhergehenden Ansprüche, **dadurch gekennzeichnet, dass** die die Hauptaufgabe durchführende landwirtschaftliche Arbeitsmaschine (2) nicht autonom und/oder autonom jedoch nicht als Universal-Arbeitsmaschine (4) oder als autonome landwirtschaftliche Universal-Arbeitsmaschine (4) ausgestaltet sein kann, und/oder, dass die Hauptaufgabe von einem Verbund autonomer landwirtschaftlicher Arbeitsmaschinen (2) durchgeführt werden kann.

10. Schwarmassistenzsystem nach einem der vorhergehenden Ansprüche, **dadurch gekennzeichnet, dass** das Schwarmassistenzsystem (8) eingerichtet ist, zusätzliche eine die Hauptaufgabe durchführende autonome landwirtschaftliche Arbeitsmaschine (2), insbesondere Universal-Arbeitsmaschine (4), zu unterstützen, vorzugsweise der autonomen landwirtschaftlichen Arbeitsmaschine (2) Prozesswissen zu übermitteln und/oder die landwirtschaftliche Arbeitsaufgabe zu planen und zu überwachen.

11. Schwarmassistenzsystem nach einem der vorhergehenden Ansprüche, **dadurch gekennzeichnet, dass** das Schwarmassistenzsystem (8) eingerichtet ist, im Rahmen der Überwachung der Hauptaufgabe und/oder Nebenaufgabe eine Abweichung von der Planung festzustellen und durch Übermittlung einer Steueranweisung an mindestens eine der autonomen landwirtschaftlichen Universal-Arbeitsmaschinen (4) der Abweichung entgegenzuwirken.

12. Schwarmassistenzsystem nach einem der vorhergehenden Ansprüche, **dadurch gekennzeichnet, dass** das Schwarmassistenzsystem (8) eingerichtet ist, im Rahmen der Überwachung der Hauptaufgabe und/oder Nebenaufgabe einen unerwarteten Zustand festzustellen und eine Notfallroutine zur Reaktion auf den unerwarteten Zustand einzuleiten, vorzugsweise, dass das Schwarmassistenzsystem (8) eingerichtet ist, in der Notfallroutine eine Steueranweisung, insbesondere eine Stopp-Anweisung, an mindestens eine der autonomen landwirtschaftlichen Universal-Arbeitsmaschinen (4) zu übermitteln und/oder einen Nutzer zu informieren.

13. Verfahren zum Planen und Steuern des Einsatzes mindestens einer autonomen landwirtschaftlichen Universal-Arbeitsmaschine (4) mittels eines Schwarmassistenzsystems (8), insbesondere nach einem der vorhergehenden Ansprüche, wobei das Schwarmassistenzsystem (8) die Durchführung einer landwirtschaftlichen Arbeitsaufgabe umfassend mindestens eine Hauptaufgabe und mindestens eine Nebenaufgabe unterstützt,
wobei die Hauptaufgabe von einer landwirtschaftlichen Arbeitsmaschine (2) durchgeführt wird,
wobei das Schwarmassistenzsystem (8) mit mindestens einer autonomen landwirtschaftlichen Universal-Arbeitsmaschine (4) kommuniziert,
wobei das Schwarmassistenzsystem (8) der autonomen landwirtschaftlichen Universal-Arbeitsmaschine (4) eine der Nebenaufgabe zur Durchführung zuweist und die Durchführung der Nebenaufgabe unterstützt.

14. Autonome landwirtschaftliche Universal-Arbeitsmaschine eingerichtet zur Verwendung in dem Verfahren nach Anspruch 13.

15. Computerprogrammprodukt umfassend Befehle, die bei ihrer Ausführung eine Recheneinheit veranlassen, als Schwarmassistenzsystem (8) nach einer der Ansprüche 1 bis 12 zu funktionieren.
